# EUROPÄISCHE PATENTSCHRIFT

(11) **EP 1 944 234 B1**
(45) Veröffentlichungstag und Bekanntmachung des Hinweises auf die Patenterteilung: **05.08.2009**
(21) Anmeldenummer: 08000352.8
(22) Anmeldetag: 10.01.2008
(51) Int. Cl.: B64C 27/10, B64C 27/56, B64C 27/57, B64C 27/605

(54) **Rotorsystem**
Rotor system
Système de rotor

(30) Priorität: 12.01.2007 DE 102007002586
(43) Veröffentlichungstag der Anmeldung: 16.07.2008
(73) Patentinhaber: Rotorfly Ltd., Ufa, Ferina2 (RU)
(72) Erfinder: Chribkow, Viktor Konstantinowich, 453300 Kumertau (RU); Podnebesnow, Boris Jakowlewich, 453300 Kumertau (RU)
(74) Vertreter: Plöger, Jan Manfred

(56) Entgegenhaltungen:
- DE-A1- 2 039 101
- DE-A1- 2 651 577
- DE-U1-5202007 014 39
- US-A- 3 448 810
- US-B2- 7 083 142

## Beschreibung

Die vorliegende Erfindung betrifft Rotorsystem für ein Luftfahrzeug, mit zwei koaxial und übereinander angeordneten Rotoren, die antreibbar sind, um sich gegenläufig zueinander zu drehen, einem Getriebe zum Antreiben einer ersten Welle, an der eine erste Taumelscheibe zur Ansteuerung von Rotorblättern des unteren Rotor vorgesehen ist, und einer zweiten Welle, an der eine zweite Taumelscheibe zur Ansteuerung von Rotorblättern des oberen Rotors vorgesehen ist,

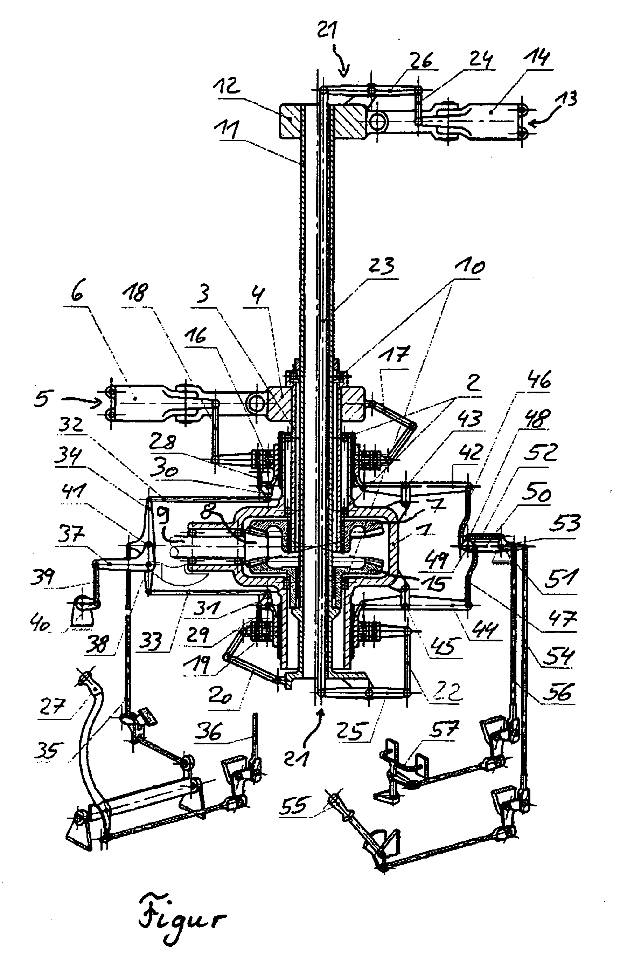

Derartige koaxiale Rotorsysteme zur Erzeugung des Auf- und Vortriebs und zur Steuerung eines Luftfahrzeuges, insbesondere eines Hubschraubers, sind bekannt. Beispielsweise ist ein derartiges Rotorsystem bei den Hubschraubermodellen Ka-26 und Ka-32 der Firma Kamov realisiert und u.a. in "Hubschrauber Ka-26" von N.F. Surikov et al, M.: Transport, 1982, S. 107-110, Bild 57, beschrieben.

Das Rotorsystem des Hubschraubermodells Ka-26 weist ein Getriebe mit zwei koaxialen Wellen auf, die sich entgegengesetzt drehen und auf denen zwei Rotornaben mit Gelenken für die jeweiligen Rotorblätter befestigt sind. Dieses koaxiale Rotorsystem enthält Steuerungsketten für jeden der beiden Rotoren, die zwei Taumelscheiben, zwei Gleitstücke, eine Vorrichtung zur kollektiven und differenzialen Ansteuerung der Rotorblätter der Rotoren und alle Aggregate verbindende Steuerstangen bestehen.

Die Taumelscheibe zur Ansteuerung des unteren Rotors ist auf dem oberen Teil des Getriebes fest gelagert und sie ist kinematisch mit einem Steuerknüppel für eine zyklische Ansteuerung der Rotorblätter verbunden. Die zyklische Ansteuerung wird hierbei durch eine entsprechende Neigung der Taumelscheibe realisiert. Die Taumelscheibe zur Ansteuerung der Rotorblätter des oberen Rotors ist hingegen auf der Welle des Getriebes zwischen den Rotoren gelagert und sie ist mit der unteren Taumelscheibe über Steuerstangen verbunden, die sich mit dem unteren Rotor drehen und die Parallelität der Neigung der oberen und der unteren Taumelscheibe gewährleisten.

Die oberen und unteren Gleitstücke sind auf der Antriebswelle des oberen Rotors in dem Zwischenraum zwischen dem oberen und dem unteren Rotor befestigt. Die Gleitstücke sind über Schrauben in Schlitzen der Antriebswelle mit den Steuerstangen verbunden, die durch die Antriebswelle hindurch geführt sind. Sie sind weiterhin über diese Steuerstangen mit einer Hebel- und Schraubenvorrichtung zur kollektiven und differenzialen Ansteuerung der Rotorblätter der Rotoren im unteren Teil des Getriebes verbunden.

Die Taumelscheibe für den unteren Rotor ist über die Hebel des unteren Gleitstücks durch die Steuerstangen mit den Achsgelenken der Rotorblätter des unseren Rotors verbunden. Die Taumelscheibe des oberen Rotors ist ebenfalls durch die Steuerstangen über die Hebel des oberen Gleitstücks mit den Achsgelenken der Rotorblätter des oberen Rotors verbunden.

Bei allen bekannten Tragsystemen für Hubschrauber mit einer Befestigung der Rotorblätter an der Nabe mittels der Achsgelenke entsteht infolge des sog. "schiefen" Umströmens des Rotors bei einem Vorwärtsflug ein Seitenabfall des Rotorkegels. Das Gleiche gilt entsprechend bei jeglichem Verlassen des reinen Schwebeflugzustandes, also auch bei einem Flug mit einer seitlichen Bewegungsrichtung oder einem Rückwärtsflug. Bei den Hubschraubern mit koaxialen Rotoren drehen sich die Rotoren in der Regel gegenläufig. Deswegen sind die Seitenabfälle des jeweiligen Rotorkegels vom oberen und vom unteren Rotor bei dem Vorwärtsflug entgegengerichtet. Dies führt zu einer Annäherung der Enden der Rotorblätter des oberen und des unteren Rotors auf einer Seite des Hubschraubers.

Bei dem Tragsystem des vorstehend beschriebenen Hubschraubers kommt es bei einer kleinen Fluggeschwindigkeit zu einer Annäherung der Enden der Rotorblätter in einem Bereich hinten links des Hubschraubers. Mit Erhöhung der Geschwindigkeit gleichen sich die Rotorkegel zunächst an und bei einer größeren Fluggeschwindigkeit fallen sie in entgegengesetzte Richtungen ab. D.h. der Kegel des oberen Rotors neigt sich nach rechts und der Kegel des unteren Rotors neigt sich nach links. Dies führt bei der größeren Fluggeschwindigkeit zu einer Annäherung der Enden der Rotorblätter des oberen und des unteren Rotors in einem Bereich vorne rechts des Hubschraubers. Die Annäherung der Enden der Rotorblätter führt zu einer Einschränkung der Flugeigenschaften und zu einer Verminderung der Flugsicherheit.

Die vorbekannte Getriebekonstruktion für das Rotorsystem mit zwei koaxialen Rotoren weist eine komplizierte Konstruktion auf. Die obere und die untere Taumelscheibe sind über sich mitdrehende Steuerstangen miteinander konstruktiv verbunden, die die Steuereingaben von der unteren Taumelscheibe, die mit dem Steuerknüppel verbunden ist, durch die Ebene des drehenden unteren Rotors zur oberen Taumelscheibe übertragen. Die konstruktive Verbindung der Taumelscheiben erlaubt es nicht, die beim Flug auftretenden einander entgegen gerichteten Seitenabfälle der Rotorkegel des oberen und des unteren Rotors zu vermeiden oder auszugleichen.

Aus der US 7 083 142 B2 ist ein gattungsgemäßes Rotorsystem für einen Militärhubschrauber bekannt. Die Taumelscheiben für den oberen und den unteren Rotor werden durch getrennte Servo-Mechanismen bewegt. Die Servo-Mechanismen werden von einem elektrischen Flugsteuerungssystem kontrolliert. Nachteilig hieran ist, dass das beschriebene Rotorsystem nur bei Hubschraubern einsetzbar ist, die über ein elektronisches Flugsteuerungssystem verfügen. aus der DE 26 51 577 ist eine Vorrichtung zur Steuerung von Flugzeugen mit zwei starren Rotoren bekannt, bei der der Phasenwinkel eines jeden Rotors in Abhängigkeit von der Fluggeschwindigkeit verändert wird.

Vor diesem Hintergrund ist es die Aufgabe der vorliegenden Erfindung, ein einfach konstruiertes Rotorsystem mit zwei koaxialen Rotoren mit weniger Bauelementen und Gelenken anzugeben, das ohne ein Flugsteuerungssystem auskommt.

Diese Aufgabe wird durch ein Rotorsystem mit den Merkmalen gemäß Anspruch 1 gelöst.

Bei einem Rotorsystem der eingangs beschriebenen Art ist erfindungsgemäß vorgesehen, dass das Rotorsystem derart eingerichtet ist, dass die erste und die zweite Taumelscheibe in diametral entgegengesetzte Richtungen axial geneigt werden. Auf diese Weise wird eine differenziale zyklische Ansteuerung der Rotorblätter des oberen und des unteren Rotors in den Steuerungsketten zur Längs- und Quersteuerung des Hubschraubers ermöglicht. Die einander entgegengesetzt ausgerichteten Seitenabfälle des oberen und des unteren Rotors werden durch die erfindungsgemäße, differenziale zyklische Steuerung ausgeglichen und korrigiert, so dass eine gefährliche Annäherung der Enden der Rotorblätter auch ohne Vergrößerung des zwischen den Rotorebenen liegenden Abstandes vermieden wird.

Für die zyklische Ansteuerung der Rotorblätter ist das erfindungsgemäße Rotorsystem bevorzugt derart eingerichtet, dass die erste und die zweite Taumelscheibe parallel in die gleiche Richtung axial geneigt werden. Weiterhin bevorzugt ist das Rotorsystem derart eingerichtet, dass zusätzlich die erste und die zweite Taumelscheibe in die gleiche Richtung und/oder in zu einander entgegengesetzte Richtungen axial verschoben werden. Eine Verschiebung in die gleiche Richtung bewirkt die kollektive Ansteuerung der Rotorblätter, d.h. die Steigung der Rotorblätter wird für beide Rotoren im gleichen Maß verändert. Die Verschiebung in einander entgegengesetzte Richtung bewirkt eine differenziale Ansteuerung der Rotorblätter, d.h. die Steigung der Rotorblätter wird für die beiden Rotoren unterschiedlich verändert. Aufgrund der nun nicht mehr ausgeglichenen Reaktionsmomente dreht sich das Luftfahrzeug um die gemeinsame Achse der Rotoren.

In vorteilhafter Weise ist die erste Taumelscheibe zur Ansteuerung der Rotorblätter des unteren Rotors an dem oberen Teil des Getriebes gelagert und über ein Schlitzgelenk mit einer Nabe des unteren Rotors verbunden. Weiterhin bevorzugt ist die erste Taumelscheibe über Steuerstangen mit den Rotorblättern des unteren Rotors verbunden.

Bevorzugt ist die zweite Taumelscheibe zur Ansteuerung der Rotorblätter des oberen Rotors an dem unteren Teil des Getriebes gelagert und über ein Schlitzgelenk mit einer Nabe des oberen Rotors verbunden. Ferner ist die zweite Taumelscheibe bevorzugt über Steuerstangen mit den Rotorblättern des oberen Rotors verbunden. Aufgrund des vorstehend angegebenen Aufbaus sind die beiden Taumelscheiben konstruktiv nicht direkt miteinander verbunden, so dass auch eine individuelle Ansteuerung und Neigung derselben ermöglicht ist.

Vorteilhafterweise ist die Steuerstange zur Steuerung des oberen Rotors innerhalb der zweiten Welle angeordnet.

In vorteilhafter Weise sind Sensoren zur Erfassung einer Annäherung der Enden der Rotorblätter und ferner Aktuatoren zur Neigung der Taumelscheiben in Abhängigkeit der erfassten Sensorsignale vorgesehen. Die differenziale zyklische Ansteuerung der Rotorblätter kann hierbei manuell nach einem speziellen Programm entsprechend der Geschwindigkeit des Luftfahrzeugs oder automatisch erfolgen, beispielsweise über elektrischen Aktuatoren.

Nachfolgend wird die vorliegende Erfindung durch die detaillierte Beschreibung einer Ausführungsform unter Bezug auf die beigefügte Zeichnung beispielhaft näher erläutert.

In der einzigen Figur ist eine vereinfachte Skizze des erfindungsgemäßen Rotorsystems dargestellt. Zur Vereinfachung der Darstellung ist in der Figur lediglich die Steuerkette der Quersteuerung dargestellt, da der prinzipielle Aufbau der Steuerketten der Quersteuerung sowie der Längssteuerung identisch ist. Im Folgenden wird zunächst der konstruktive Aufbau des erfindungsgemäßen Rotorsystems beschrieben.

Das Rotorsystem weist ein Getriebe 1 auf, in dem auf Lagern 2 eine erste, hohle Welle 3 montiert ist, die vertikal ausgerichtet ist. Im oberen Abschnitt der Welle 3 ist eine erste Nabe 4 für einen unteren Rotor 5 mit Achsgelenken 6 befestigt, von denen nur eines in der Figur gezeigt ist. An dem Achsgelenk 6 ist jeweils ein Rotorblatt (nicht dargestellt) des unteren Rotors 5 angeordnet. An dem unteren Abschnitt der ersten Welle 3 ist ein oberes Kegelrad 7 befestigt, das mit einem Kegeltreibrad 8 kämmt, das an einer Antriebswelle 9 vorgesehen ist.

In der Welle 3 ist auf Lagern 10 eine zweite, hohle Welle 11 montiert, die ebenfalls vertikal ausgerichtet ist. Im oberen Abschnitt der zweiten Welle 11 ist eine zweite Nabe 12 für einen oberen Rotor 13 mit Achsgelenken 14 befestigt, von denen ebenfalls nur eines in der Figur gezeigt ist. An dem Achsgelenk 14 ist jeweils ein Rotorblatt (nicht dargestellt) des oberen Rotors 13 angeordnet. An dem unteren Abschnitt der zweiten Welle 11 ist ein unteres Kegelrad 15 befestigt, das ebenfalls mit dem Kegeltreibrad 8 der Antriebswelle 9 kämmt.

An dem oberen Teil des Gehäuses des Getriebes 1 ist eine erste Taumelscheibe 16 zur Ansteuerung der Rotorblätter des unteren Rotors 5 auf Schlitzen montiert, um ein axiales Verschieben der Taumelscheibe 16 zu ermöglichen. Der äußere (drehbare) Ring der Taumelscheibe 16 ist über ein erstes Schlitzgelenk 17 mit der Nabe 4 des unteren Rotors 5 und über eine Steuerstange 18 mit dem Achsgelenk 6 des Rotorblattes des unteren Rotors 5 verbunden.

Eine zweite Taumelscheibe 19 zur Ansteuerung der Rotorblätter des oberen Rotors 13 ist an dem unteren Teil des Gehäuses des Getriebes 1 ebenfalls auf Schlitzen montiert, um ein axiales Verschieben der Taumelscheibe 19 zu ermöglichen. Der äußere (drehbare) Ring der Taumelscheibe 19 ist über ein zweites Schlitzgelenk 20 mit der zweiten Welle 11 und über ein Steuerstangensystem 21 mit dem Achsgelenk 14 des Rotorblattes des oberen Rotors 13 verbunden. Das Steuerstangensystem 21 weist drei Steuerstangen 22, 23 und 24 auf, die über zwei Hebel 25 sowie 26 miteinander verbunden sind. Die Steuerstange 23 ist hierbei innerhalb der zweiten Welle 11 angeordnet.

Die inneren Ringe (Steuerringe) der beiden Taumelscheiben 16 bzw. 19 des unteren Rotors 5 bzw. des oberen Rotors 13 sind mit einem Steuerknüppel 27 zur zyklischen Ansteuerung der Rotorblätter in der Steuerkette bzw. in dem Kanal der Quersteuerung verbunden. Diese Verbindung erfolgt über zwei Laschen 28 und 29, zwei Hebel 30 und 31, zwei Steuerstangen 32 und 33, einen dreiarmigen Hebel 34 und eine weitere Steuerstange 35. In der Steuerkette bzw. in dem Kanal der Längssteuerung sind hierzu analoge Hebel und Steuerstangen mit der Steuerstange 36 verbunden (der Kanal der Längssteuerung ist in der Figur nicht dargestellt).

Weiterhin sind die inneren Ringe der beiden Taumelscheiben 16 bzw. 19 des unteren Rotors 5 und des oberen Rotors 13 mit einer Vorrichtung zur differenzialen zyklischen Ansteuerung der Rotorblätter verbunden, die einen zweiarmigen Hebel 37, der auf einer Achse 38 eines Festlagers befestigt ist, eine Steuerstange 39 und einen Aktuator 40 aufweist. Der Aktuator 40 ist mit Signalgebern bzw. Sensoren (nicht dargestellt) verbunden, die den Abstand zwischen den Enden der Rotorblätter des oberen und des unteren Rotors 13 bzw. 5 erfassen. Auf dem oberen Arm des zweiarmigen Hebels 37 ist auf einer Achse 41 der dreiarmige Hebel 34 befestigt. Mit dem zweiten, unteren Arm ist der zweiarmige Hebel 37 über die Steuerstange 39 mit dem Aktuator 40 verbunden.

In dem Kanal der Längssteuerung ist die kinematische Verbindung der Taumelscheiben 16 bzw. 19 mit der Vorrichtung zur differenzialen zyklischen Ansteuerung der Rotorblätter analog und wird deshalb in der Figur nicht dargestellt.

Die Taumelscheibe 16 für den unteren Rotor 5 und die Taumelscheibe 19 für den oberen Rotor 13, die sich axial auf den Schlitzen in dem oberen und in dem unteren Teil des Gehäuses des Getriebes 1 bewegen, sind über einen Hebel 42 auf einer Achse 43, einen Hebel 44 auf einer Achse 45 und zwei Steuerstangen 46 und 47 mit einem dreiarmigen Hebel 48 der Parallelogramm- und Summierungs-Hebelvorrichtung zur kollektiven und differenzialen Ansteuerung der Rotorblätter der beiden Rotoren 5 und 13 verbunden.

Der dreiarmige Hebel 48 ist durch seine Achse 49 an einem Hebel 50 befestigt, der seinerseits durch seine Achse 51 an einem Festlager befestigt ist. Der dreiarmige Hebel 48 ist ferner über eine Stange 52 mit einem zweiarmigen Hebel 53 verbunden, der an der Achse 51 befestigt ist.

Der Hebel 50 ist über eine Stange 54 mit einem Gassteigerungshebel 55 zur kollektiven Steuerung der Rotoren 5 und 13 verbunden. Der zweiarmige Hebel 53 ist über eine Stange 56 mit Fußpedalen 57 zur Steuerung der Fluglage verbunden. Üblicherweise bedient ein Pilot den Steuerknüppel 27 mit der seiner rechten Hand, während er den Gassteigerungshebel 55 mit seiner linken Hand bedient.

Nachfolgend wird die Funktionsweise des erfindungsgemäßen Rotorsystems erläutert. Das von einem Motor (nicht dargestellt) angetriebene Kegeltreibrad 8 des Getriebes 1 dreht die mit ihm verbundenen Kegelräder 7 und 15 in entgegengesetzte Richtungen. Die mit diesen Kegelrädern 7 bzw. 15 verbundenen koaxialen Wellen 3 bzw. 11 des Getriebes 1 drehen sich deshalb ebenfalls in entgegengesetzte Richtungen und mit ihnen die darauf befestigten Naben 4 bzw. 12 des unteren Rotors 5 bzw. des oberen Rotors 13.

Die kollektive Blattverstellung der Rotoren wird durch die Bewegung des Gassteigerungshebels 55 verändert. Dabei bewegt sich die Stange 54 und dreht den Hebel 50 um die Achse 51. Damit wird der dreiarmige Hebel 48 der Parallelogramm- und Summierungs-Hebelvorrichtung parallel verschoben. Die Steuerstangen 46 und 47 bewegen sich entsprechend beide gleichermaßen in dieselbe Richtung. Dabei drehen sie die Hebel 42 und 44 entsprechend um die Achsen 43 und 45 und verschieben damit axial die Taumelscheiben 16 und 19 des unteren Rotors 5 und des oberen Rotors 13 auf den Schlitzen im oberen und unteren Teil des Getriebes 1 gleichermaßen in die gleiche Richtung.

Durch die Verschiebung der Taumelscheibe 16, beispielsweise nach oben, wird über die Stange 18 der Mitnehmer des Achsgelenks 6 gedreht und damit die kollektive Blattverstellung des unteren Rotors 5 verändert, insbesondere wird die Steigung der Rotorblätter bei einer Verschiebung der Taumelscheibe 16 nach oben erhöht. Durch die Verschiebung der Taumelscheibe 19 nach oben wird über die Steuerstange 22, den Hebel 25, die Steuerstange 23, den Hebel 26 und die Steuerstange 24 der Mitnehmer des Achsgelenks 14 gedreht und damit die kollektive Blattverstellung des oberen Rotors 13 entsprechend dem unteren Rotor 5 verändert, d.h. die Steigung der Rotorblätter wird ebenfalls erhöht.

Die differenziale Blattverstellung wird durch die Bewegung der Fußpedale 57 erreicht, beispielsweise durch eine Betätigung mit dem rechten Fuß. Hierbei wird die Steuerstange 56 nach oben bewegt, die den zweiarmigen Hebel 53 um die Achse 51 gegen den Uhrzeigersinn dreht und über die Steuerstange 52 den dreiarmigen Hebel 48 um die Achse 49 der Parallelogramm- und Summierungs-Hebelvorrichtung ebenfalls gegen den Uhrzeigersinn dreht.

Der dreiarmige Hebel 48 bewegt durch seine Drehung um die Achse 49 die Steuerstangen 46 und 47 gleichermaßen in entgegengesetzte Richtungen, beispielsweise die Steuerstange 47 nach oben und die Steuerstange 46 nach unten, weil die gegenüberliegenden Hebelarme des Hebels 48 gleich lang sind. Die Bewegung der Steuerstangen 46 und 47 führt zu einer Drehung der Hebel 42 und 44 um ihre Achsen 43 und 45 und damit zu einer Verschiebung der Taumelscheiben 16 und 19 gleichermaßen in entgegengesetzte Richtungen, beispielsweise die Taumelscheibe 16 nach oben und die Taumelscheibe 19 nach unten.

Durch die Verschiebung der Taumelscheibe 16 wird über die Steuerstange 18 der Mitnehmer des Achsgelenks 6 gedreht und damit die kollektive Blattverstellung des unteren Rotors 5 verändert (die Steigung der Rotorblätter wird erhöht). Und durch die Verschiebung der Taumelscheibe 19 in die entgegengesetzte Richtung (nach unten) wird über die Steuerstange 22, den Hebel 25, die Steuerstange 23, den Hebel 26 und die Steuerstange 23 der Mitnehmer des Achsgelenks 14 gedreht und damit die kollektive Blattverstellung des oberen Rotors 13 in die entgegengesetzte Richtung verändert (die Steigung der Rotorblätter wird verringert).

Die nicht ausgeglichenen Reaktionsmomente der Rotoren, denn das Reaktionsmoment bei dem unteren Rotor 5 ist dann größer, bewirken die Drehung des Hubschraubers in die Richtung, die der Drehrichtung des stärker belasteten Rotors entgegengesetzt ist, in dem Beispiel also nach rechts. Hierbei wird berücksichtigt, dass bei der betrachteten Variante der obere Rotor, wie beim vorbekannten Hubschrauber, sich im Uhrzeigersinn bei einer Betrachtung von oben dreht.

Die zyklische Blattverstellung wird durch die Neigung des Steuerknüppels 27 in Längs- und Querrichtung erreicht. Durch die Neigung des Steuerknüppels 27 in Querrichtung, beispielsweise nach rechts, wird dann die Steuerstange 35 nach oben bewegt, was zu einer Drehung im Uhrzeigersinn des dreiarmigen Hebels 34 um seine Achse 41 führt. Die Drehung des dreiarmigen Hebels 34 wiederum führt über die Steuerstange 32 zu einer Drehung gegen den Uhrzeigersinn des Hebels 30. Die Drehung des Hebels 30 um seine Achse bewirkt über die Lasche 28, die mit dem Steuerring der Taumelscheibe 16 verbunden ist, die Neigung der Taumelscheibe 16 dann in die Richtung, in die der Steuerknüppel 27 geneigt wurde.

Ebenfalls führt die Drehung des dreiarmigen Hebels 34 über die Steuerstange 33 zur Drehung (gegen den Uhrzeigersinn) des Hebels 31. Die Drehung des Hebels 31 um seine Achse bewirkt über die Lasche 29, die mit dem Steuerring der Taumelscheibe 19 verbunden ist, die Neigung der Taumelscheibe 19 des oberen Rotors 13 ebenfalls in die Richtung, in die der Steuerknüppel 27 geneigt wurde.

Die Neigung der beiden Taumelscheiben in die gleiche Richtung um denselben Wert bewirkt über die Mitnehmer der Achsgelenke 6 und 14 eine Änderung der zyklischen Blattverstellung des unteren Rotors 5 und des oberen Rotors 13, was zu einer Neigung der resultierenden aerodynamischen Kraft und entsprechend zu einer Neigung des Hubschraubers in die Richtung führt, in die der Steuerknüppel 27 geneigt wurde. Dabei sind die Steuerstangen 32 und 33 ausreichend lang, um die Fehler in der zyklischen Ansteuerung zu minimieren, die mit der axialen Verschiebung der Taumelscheiben 16 und 19 bei der kollektiven und differenzialen Ansteuerung entstehen.

Bei der Vorwärtsbewegung des Hubschraubers entstehen infolge des so genannten "schiefen" Umströmens der Rotoren diametral entgegengerichtete Seitenabfälle der Rotorkegel. Wenn von den Sensoren Signale über die Annäherung der Enden der Rotorblätter des unteren Rotors 5 und des oberen Rotors 13 ankommen (über den Abstand und das Azimut der Annäherung), dann drehen die Aktuatoren 40 zur differenzialen zyklischen Ansteuerung der Rotorblätter der Rotoren 5 und 13 in den Kanälen der Quer- und Längssteuerung die analogen zweiarmigen Hebel 37 um die jeweilige Achse 38, um die Winkel, die den gesendeten Signalen entsprechen (in der Zeichnung ist die differenziale zyklische Steuerung der Rotoren nur im Kanal der Quersteuerung dargestellt, da diese analog sind).

Durch die Drehung des zweiarmigen Hebels 37 wird der dreiarmige Hebel 34 zusammen mit den Steuerstangen 32 und 33 in Abhängigkeit der erfassten und gesendeten Sensorsignale nach rechts oder nach links bewegt, dabei drehen sich die mit diesen Steuerstangen verbundenen Hebel 30 und 31 in entgegengesetzte Richtungen und neigen damit die Taumelscheiben 16 und 19 um gleiche Winkel, aber in verschiedene Richtungen.

Folglich erhält jeder Rotor von seiner Taumelscheibe korrigierende Steuereingaben auf die Achsgelenke 6 und 14 (durch die jeweiligen Mitnehmer) und ändert dadurch differenzial die zyklische Blattverstellung, was zur gleichen Neigung der Rotorkegel des unteren Rotors 5 und des oberen Rotors13, aber in diametral entgegengesetzte Richtungen, führt und damit die entstandenen Seitenabfälle der Rotorkegel ausgleicht und beseitigt und den ursprünglichen Abstand zwischen den Enden der Rotorblätter wiederherstellt.

## Patentansprüche

1. Rotorsystem für ein Luftfahrzeug, mit
(a) zwei koaxial und übereinander angeordneten Rotoren (5, 13), die antreibbar sind, um sich gegenläufig zueinander zu drehen,
(b) einem Getriebe zum Antreiben
(i) einer ersten Welle (3), an der eine erste Taumelscheibe (16) zur Ansteuerung von Rotorblättern des unteren Rotor (5) vorgesehen ist, und
(ii) einer zweiten Welle (11), an der eine zweite Taumelscheibe (19) zur Ansteuerung von Rotorblättern des oberen Rotors (13) vorgesehen ist,
**dadurch gekennzeichnet, dass**
(c) die erste Taumelscheibe (16) und die zweite Taumelscheibe (19) mechanisch über eine Vorrichtung so miteinander verbunden sind, dass
(i) mittels eines Aktors (40) die zweite Taumelscheibe (19) in diametral entgegengesetzte Richtung zur ersten Taumelscheibe (16) neigbar ist und
(ii) und mittels eines Steuerknüppels (27) die zweite Taumelscheibe (19) in die gleiche Richtung und um denselben Wert wie die erste Taumelscheibe (16) geneigt wird.

2. Rotorsystem nach Anspruch 1, **dadurch gekennzeichnet, dass** die erste Taumelscheibe (16) und die zweite Taumelscheibe (19) so mechanisch über die Vorrichtung so miteinander verbunden sind, dass sie mittels des Aktors (40) um gleiche Beträge gegeneinander neigbar ist.

3. Rotorsystem nach einem der vorstehenden Ansprüche, **dadurch gekennzeichnet, dass** die Vorrichtung einen dreiarmigen Hebel (34) umfasst, wobei durch ein Drehen des dreiarmigen Hebels die Taumelscheiben (16, 19) in die gleiche Richtung und um denselben Wert wie die erste Taumelscheibe geneigt wird.

4. Rotorsystem nach Anspruch 3, **dadurch gekennzeichnet, dass** der dreiarmige Hebel (34) an einem zweiarmigen Hebel (37) gelagert ist, wobei der zweiarmige Hebel (37) mit dem Aktor (40) verbunden ist.

5. Rotorsystem nach einem der vorstehenden Ansprüche, **dadurch gekennzeichnet, dass** Sensoren zur Erfassung einer Annäherung der Enden der Rotorblätter vorgesehen sind und der Aktor (40) zur Neigung der ersten Taumelscheibe (16) und der zweiten Taumelscheibe (19) in Abhängigkeit der erfassten Sensorsignale vorgesehen ist.

## Claims

1. Rotor system for an aircraft, with
(a) two rotors (5, 13) which are arranged coaxially and one above the other and can be driven in order to rotate contradirectionally to one another,
(b) a gear for the drive
(i) of a first shaft (3) on which a first swashplate (16) for the activation of rotor blades of the lower rotor (5) is provided, and
(ii) of a second shaft (11) on which a second swashplate (19) for the activation of rotor blades of the upper rotor (13) is provided,
**characterized in that**
(c) the first swashplate (16) and the second swashplate (19) are connected mechanically to one another via a device such that
(i) by means of an actuator (40) the second swashplate (19) can be inclined in the diametrally opposite direction to the first swashplate (16), and
(ii) by means of a control stick (27) the second swashplate (19) is inclined in the same direction and by the same value as the first swashplate (16).

2. Rotor system according to Claim 1, **characterized in that** the first swashplate (16) and the second swashplate (19) are connected mechanically to one another via the device such that by means of the actuator (40) they can be inclined by equal amounts with respect to one another.

3. Rotor system according to one of the preceding claims, **characterized in that** the device comprises a three-armed lever (34), the swashplates (16, 19) being inclined in the same direction and by the same value as the first swashplate as a result of a rotation of the three-armed lever.

4. Rotor system according to Claim 3, **characterized in that** the three-armed lever (34) is mounted on a two-armed lever (37), the two-armed lever (37) being connected to the actuator (40).

5. Rotor system according to one of the preceding claims, **characterized in that** sensors for detecting an approach of the ends of the rotor blades to one another are provided, and the actuator (40) is provided for inclining the first swashplate (16) and the second swashplate (19) as a function of the detected sensor signals.

## Revendications

1. Système de rotor pour un véhicule aérien, comprenant
(a) deux rotors (5, 13) coaxiaux agencés l'un au-dessus de l'autre, qui sont actionnables pour tourner en sens inverses l'un de l'autre,
(b) une transmission pour entraîner
(i) un premier arbre (3) sur lequel est prévu un premier plateau oscillant (16) pour piloter des pales de rotor du rotor (5) inférieur, et
(ii) un deuxième arbre (11) sur lequel est prévu un deuxième plateau oscillant (19) pour piloter des pales de rotor du rotor (13) supérieur,
**caractérisé en ce que**
(c) le premier plateau oscillant (16) et le deuxième plateau oscillant (19) sont reliés ensemble mécaniquement par l'intermédiaire d'un dispositif, de telle façon que
(i) le deuxième plateau oscillant (19) est inclinable dans une direction diamétralement opposée par rapport au premier plateau oscillant (16), au moyen d'un actuateur (40), et
(ii) on incline le deuxième plateau oscillant (19) dans la même direction et de la même valeur que le premier plateau oscillant (16), au moyen d'un levier de commande (27).

2. Système de rotor selon la revendication 1, **caractérisé en ce que** le premier plateau oscillant (16) et le deuxième plateau oscillant (19) sont reliés ensemble mécaniquement par l'intermédiaire du dispositif, de telle sorte qu'ils soient inclinables des mêmes valeurs l'un par rapport à l'autre, au moyen de l'actuateur (40).

3. Système de rotor selon l'une quelconque des revendications précédentes, **caractérisé en ce que** le dispositif comprend un levier (34) à trois bras, les plateaux oscillants (16, 19) étant inclinés dans la même direction et de la même valeur que le premier plateau oscillant par pivotement du levier à trois bras.

4. Système de rotor selon la revendication 3, **caractérisé en ce que** le levier (34) à trois bras est articulé à un levier (37) à deux bras relié à l'actuateur (40).

5. Système de rotor selon l'une quelconque des revendications précédentes, **caractérisé en ce que** sont prévus des détecteurs pour capter un rapprochement des extrémités des pales de rotor, et l'actuateur (40) est prévu pour incliner le premier plateau oscillant (16) et le deuxième plateau oscillant (19) en fonction des signaux de détecteur captés.
